# EUROPEAN PATENT SPECIFICATION

(11) **EP 1 599 310 B1**
(45) Date of publication and mention of the grant of the patent: **24.08.2011**
(21) Application number: 04703315.4
(22) Date of filing: 20.01.2004
(51) Int. Cl.: B23K 9/10, F16P 3/00, B23K 9/28

(54) **AN ELECTRODE HOLDER WITH ISOLATING SWITCH**
ELEKTRODENHALTER MIT ISOLIERSCHALTER
PORTE-ELECTRODE A SECTIONNEUR

(30) Priority: 04.03.2003 AU 2003200778
(43) Date of publication of application: 30.11.2005
(73) Proprietor: Dazcor IP Pty Ltd, Townsville QLD 4818 (AU)
(72) Inventor: SCHNEIDER, Darryl Douglas, Townsville, Queensland 4818 (AU)
(74) Representative: Eder, Thomas
(86) International application number: PCT/AU2004/000062
(87) International publication number: WO 2004/078402

(56) References cited:
- GB-A- 1 327 584
- GB-A- 1 327 584
- GB-A- 2 144 958
- GB-A- 2 144 958
- JP-A- 2000 061 641
- US-A- 2 265 135
- PATENT ABSTRACTS OF JAPAN & JP 2000 061641 A (ONAWA YOSHIHIRO) 29 February 2000
- PATENT ABSTRACTS OF JAPAN & JP 2000 326070 A (HIOKI EE CORP) 28 November 2000
- DATABASE WPI Derwent Publications Ltd., London, GB; Class M23, AN 1976-83246X, XP003012208 & DD 122 208 A1 20 September 1976
- DATABASE WPI Derwent Publications Ltd., London, GB; Class P55, AN 1993-257191, XP003012209 & SU 1 758 057 A1 (CHERPOVETS) 23 August 1992

## Description

### Field of the Invention.

This invention is directed to an electrode holder, according to the preamble of claim 1, of the type used for welding, air arc gouging, thermal lancing etc, and which contains an isolating switch and optionally an electrode locking arrangement which is associated with the isolating switch such that operation of the isolating switch permits removal of the electrode from the electrode holder. Such an electrode holder is known from US-A-2,310,020.

### Background Art.

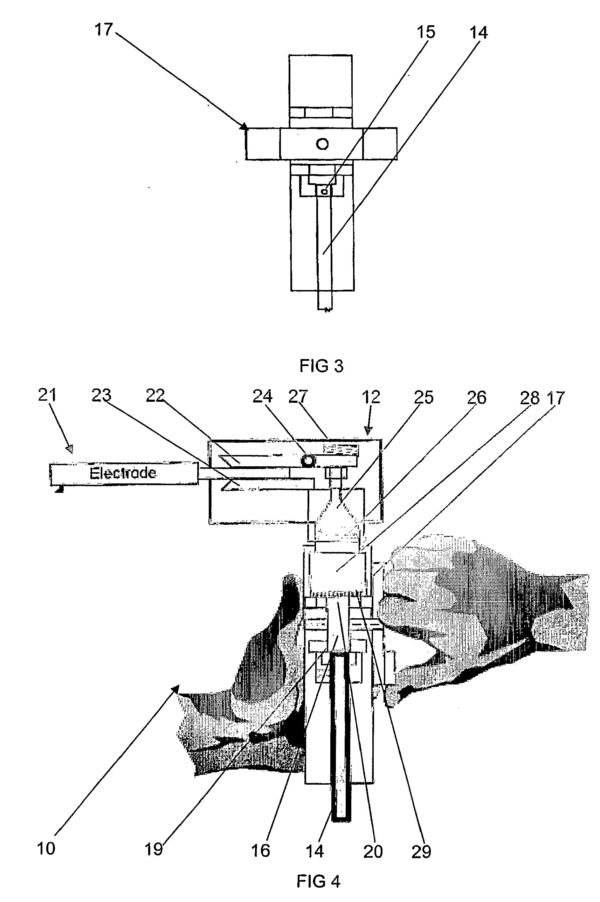

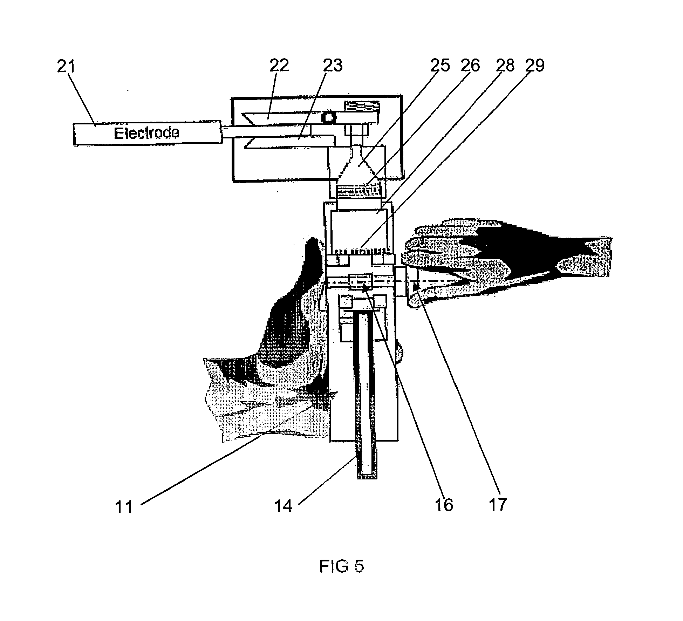

In the field or welding, etc, there is provided an apparatus which contains an electrode and where the electrode is held in a holder, the holder typically being handheld by an operator. Figure 4 and figure 5 illustrate a typical handheld electrode holder. The electrode must be replaced periodically and there is always a hazard in doing so as it is essential that the electrode is isolated from the power prior to removal. In some situations, the electrode must be isolated from the power source when not in use. Typically, the holder is relatively light weight to allow it to be used for long periods of time without fatigue. The apparatus includes a much larger power supply which typically contains an isolating switch, however the operator may be positioned some way away from the power supply and to date there has been no isolating switch provided on, or immediately adjacent to the holder itself to allow the power to be isolated on the holder.

The electrode must be in electrical contact with the power supply. Typically, the electrode is clamped between jaws on the holder which hold the electrode in place. These jaws can be opened, typically by depressing a lever, button and the like to release the electrode. Alternatively, a twist collar is provided to release the electrode, this being illustrated as reference numeral 28 in figures 4-5. A hazardous situation can occur if an operator releases the electrode without initially switching off the power, or touches the electrode accidentally.

These electrodes and the electrode holder is used in a variety of applications. One application is manual metal arc welding which uses a consumable electrode which is held in a handheld holder. The electrode is placed close to the metal to be welded and an arc is formed to melt the metal and to form the weld. The electrode typically comprises a central metal wire and a surrounding material which decomposes to form an inert gas shield around the molten pool of metal. The electrodes are consumed and need to be regularly replaced.

Another type of welding technique is tungsten inert gas welding. In this technique, an electrode is held within a holder, and a shielding gas (typically argon), flows about the electrode and onto the work surface which is to be welded. A filler wire is used to provide the molten weld metal. The electrode is typically a tungsten electrode.

Another type of technique is a thermal cutting technique where a super hot gas or arc is used to cut a metal. These techniques include air arc gouging, and thermal lancing. Each of these techniques still requires the use of a electrode in a holder.

It will be clearly understood that, if a prior art publication is referred to herein, this reference does not constitute an admission that the publication forms part of the common general knowledge in the art in Australia or in any other country.

### Object of the Invention.

It is an object of the invention to provide an electrode holder which is provided with an isolating switch and which may also be provided with some form of mechanism to ensure that the electrode cannot be removed until the isolating switch is in the power isolating position.

It is a further object of the invention to provide an electrode holder which may at least partially overcome the above-mentioned disadvantages or provide the public with a useful or commercial choice.

In one form, the invention resides in an electrode holder, the holder containing attachment means to attach an electrode to the holder, and an isolating switch to isolate the power source from the electrode, the isolating switch being movable between a power isolating position and a power use position.

Suitably, the invention further resides in a locking arrangement for locking an electrode to the attachment means and which is operatively associated with the isolating switch such that when the isolating switch is in the power use position, the locking arrangement is in the locked position to hold an electrode in place and when the isolating switch is in the power isolating position, the locking arrangement can be moved to the unlocked position where the electrode can be removed from the attachment means.

The provision of the isolating switch and the provision of the isolating switch in association with the locking arrangement provides a much safer handpiece and reduces the hazard in replacing an electrode.

The electrode holder can be of the type used for metal welding or metal cutting operations and, for example, may be used for manual metal arc welding, gas welding, thermal lancing, air arc gouging and the like. However, no limitation is to be placed on the use of the electrode holder.

The shape and size of the holder can vary. Typically, the holder will have a hand grippable portion (a handle), and an electrode holding portion ( a head). The electrode holding portion is typically designed such that the electrode extends at an angle and typically substantially at right angles from the hand grippable portion. This can of course vary to suit. The holder can have a pistol group, can be substantially straight, or could have any other shape and configuration which is typical for electrode holders. The length of the holder can vary but may be between 10-40 cm, this being a length typical for handheld use. Similarly, the width of the holder can vary but will typically be between 5-20 cm this being typical for handheld use. The holder can be made of any suitable material which may include metal, plastics, composite material and the like.

The holder typically contains a cable connection means to allow a power cable to be attached to the holder. The cable connection means is typically on the tail portion of the holder (that is remote from the electrode portion) and typically comprises a connection screw and the like.

The holder is provided with an attachment means to attach an electrode to the holder. The attachment means comprises a pair of jaws. The jaws may comprise a lower jaw and an upper jaw. Each jaw may comprise an electrically conductive material and typically comprises metal finger members or plate members. The lower jaw and the upper jaw may be movable relative to each other. Typically, one jaw is a fixed jaw and the other jaw can move relative to the fixed jaw. However, other types of attachment means are envisaged which comprise selectively movable members to hold an electrode while still allowing the electrode to be removed when required.

The holder includes an isolating switch to isolate the power source from the electrode. The isolating switch is typically manually operable between the power isolating position and the power use position. Various types of switches are envisaged including a rotatable switch, a toggle, a lever, a knob, a dial, a button, a trigger switch and like. It is also envisaged that the isolating switch may be remotely operable via a signal such as a radiofrequency signal, an infrared beam and the like.

According to the invention there is provided a locking arrangement according to claim 1 which is associated with the isolating switch such that operation of the isolating switch operates the locking arrangement thereby locking the electrode relative to the attachment means. Thus, when the isolating switch is in the power use position, the locking arrangement is in the locking position to prevent the electrode from being removed. Conversely, when the isolating switch is in the power isolating position, the locking arrangement allows the electrode to be removed. In this arrangement, the electrode can only be removed when the power supply to the electrode has been cut off. It is considered that this provides a significant safety improvement to an electrode holder.

In a preferred form the locking arrangement locks the jaws between which the electrode is held. For instance, the locking arrangement can unlock the jaw permitting electrode removal when the isolating switch is in the power isolating position. Various ways to achieve this are envisaged.

In one particular form, the locking arrangement may comprise a first member which can move to cause one jaw to move between an open position and a closed position. The first member may be operated manually.

Suitably, the locking arrangement is adjustable to adjust for electrode having different diameters, sizes etc.

### Brief Description of the Drawings.

Embodiments of the invention will be described with reference to the following drawings in which:
Figure 1. Illustrates a top view of the electrode holder having an isolation switch in the power use position (embodiment not claimed).
   Figure 2. Illustrates a side view of the electrode holder of Figure 1 in the power isolating position (embodiment not claimed).
Figure 3. Illustrates a side view of the power isolating switch (embodiment not claimed).
Figure 4. Illustrates the electrode holder of Figure 1-3 in the power use position and about to be switched to the power isolating position.
Figure 5. Illustrates the electrode holder of figure 4 having been switched to the power isolating position.
Figure 6. Illustrates a toggle type isolating switch according to another version (embodiment not claimed)
Figure 7. Illustrates a push button type isolating switch according to another version (embodiment not claimed).
Figure 8. Illustrates typical shapes of locking splines used on the embodiment of figure 7.
Figure 9. Illustrates an isolating switch according to the invention.
Figure 10. Illustrates another version of a handle having an isolating and locking switch (embodiment not claimed).

### Best Mode.

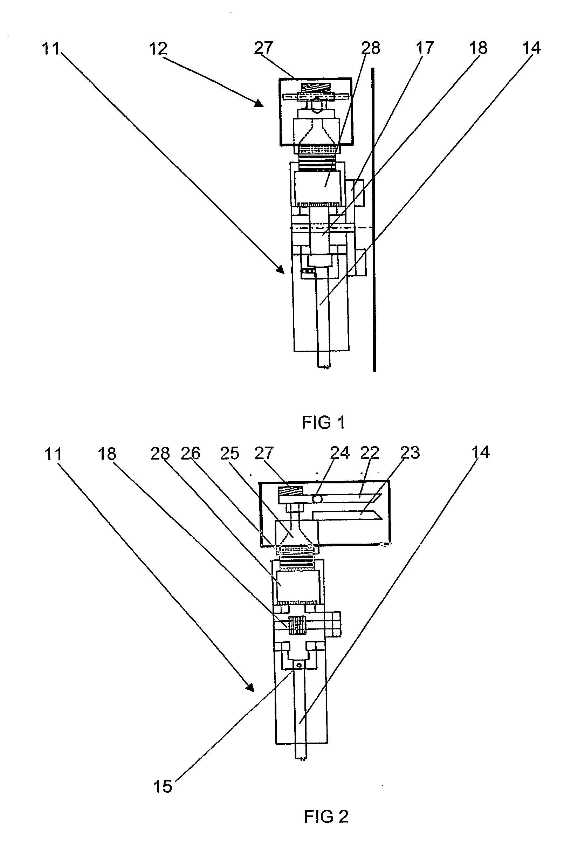

Referring to the drawings and initially to figures 4 and 5, there is illustrated an electrode holder 10 which comprises a handle portion 11 and a head portion 12. Handle portion 11 has an outer body or casing 13 which can be gripped by an operator. An electric cable 14 extends through handle portion 11 and is connected by a cable connection screw 15 (see figure 1), Of course, other types of attachment of the cable to the electrode holder can be used.

An isolating switch 16 is attached to handle portion 11. The isolating switch 16 comprises an external switch 17 which can be turned as illustrated in figures 4 and 5. The isolating switch 16 further comprises an electric connecting member 18 having two ends 19, 20. When connecting member 18 is in the "on" position illustrated in figure 4, electricity can flow from cable 14 through connecting member 18 and towards the electrode 21. However, when connecting member 18 has been rotated to the "off" position illustrated in figure 5, the connecting member does not connect either cable 14 or ultimately electrode 21.

Electrode 21 is held in place between a pair of jaws 22, 23. The arrangement as illustrated in the figures is for a manual metal arc electrode holder and therefore it is not to be seen as limiting to the invention but illustrative only of the invention. In this particular embodiment, jaw 23 is a fixed jaw while jaw 22 can pivot via a jaw pivot 24 between a clamping position illustrated in the figures and where electrode 21 is clamped in place, and a free position where jaw 22 pivots upwardly about pin 24 to allow electrode 21 to be removed. The jaw 22 can move between the free position (pivot upward position not illustrated) and the clamping position illustrated in the figures as follows: a first member 25 (also known as a tension pin), has a lower end which is threaded 26. An upper end of first member 25 is attached to the rear of jaw 22. A pivot spring 27 tensions first member 25. Collar 28 has an internal thread (not illustrated) which mates with the thread on the lower end of first member 25. The collar 28 can be manually rotated to extend first member 25 out of the collar or to retract first member 25 into the collar depending on the direction of rotation of collar 28. Thus, rotation of collar in one direction will retract first member 25 into collar 28 and in doing so will cause jaw 22 to pivot about pin 24 to a free position where electrode 21 can be removed. A new electrode can then be inserted and collar 28 is rotated in the opposite direction to cause jaw 22 to move back to the clamping position (illustrated in the figures) to clamp electrode 21 in place. Of course, other types of locking arrangements are envisaged.

The electric connecting member 18 on the isolating switch 16 functions to lock collar 28 against rotation when the isolating switch is in the "on" position. This position is illustrated in figure 4 and also in figure 1, Connecting member 18 is provided with an array of teeth on end 20 which mesh into corresponding teeth 29 on the lower peripheral edge of collar 28. When in this position, collar 28 is locked against rotation.

When the electric connecting member 18 is rotated to the "off' position illustrated in figure 5, the teeth on the electric connecting member do not engage with teeth 29 on collar 28 which means that collar 28 can be rotated to release electrode 21 from between jaws 22, 23.

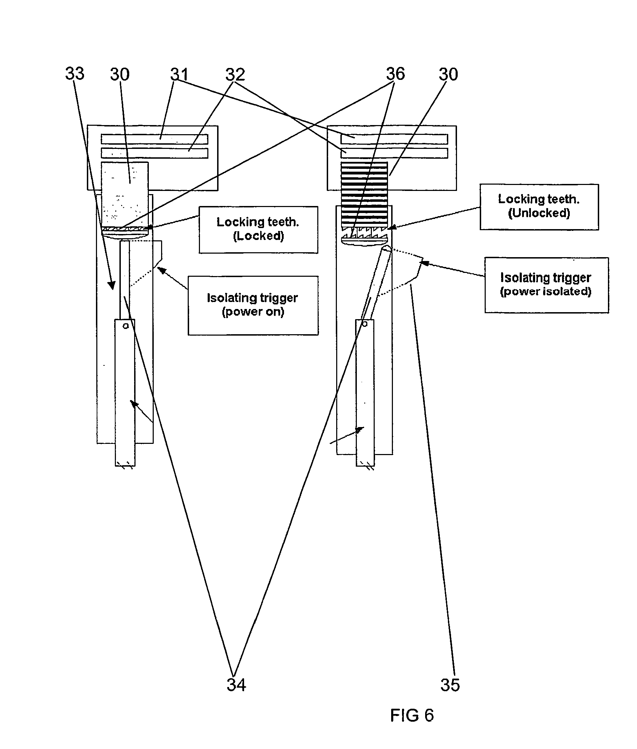

Figure 6 illustrates a version which is similar to that described above in that a locking collar 30 is provided which rotates to clamp or unclamp jaws 31, 32. An isolating switch 33 comprises an electrically conductive member 34 and an external finger or thumb operated trigger 35. Below collar 30 is provided a locking arrangement which comprises a locking disc 36. The locking disc 36 does not rotate can be spring biased against electrically conductive member 34. The locking disc 36 is provided with locking teeth which engage with locking teeth on the bottom of collar 30, this being illustrated in figure 6. The arrangement is that when trigger 35 is depressed, it moves conductive member 34 from the "on position" to the "off position". In the "off position" conductive member 34 does not push against the bottom of locking disc 36 and therefore locking disc 36 moves out of engagement with the bottom of collar 30 by virtue of locking disc being spring biased (it is envisaged that locking disc need not be spring biased and may drop-down into the out of engagement position by gravity). When locking disc 36 does not engage with the bottom of collar 30, collar 30 can be rotated to release an electrode from between jaws 31, 32. However, when the conductive member 34 is in the "on" position, locking disc 36 engages with collar 30 to prevent collar 30 from releasing an electrode between the jaws 31, 32.

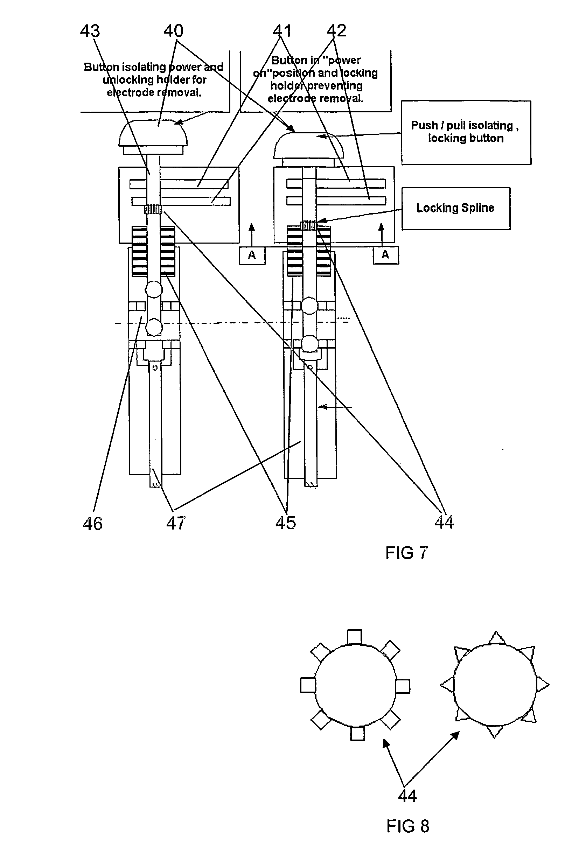

Figure 7 and figure 8 illustrate another version which basically uses a button 40. Button 40 can be pushed down to allow an electric current to flow to jaws 41, 42. Specifically, button 40 has an internal shaft 43 fitted with a peripheral spline 44. The spline 44 can move into engagement with collar 45 to prevent the collar from being rotated to release an electrode from between jaws 41, 42. When the button is depressed, spline 44 engages with collar 45 and when the button is pushed upwardly, spline 44 is released from engagement with collar 45 and an electrode can be removed or inserted between jaws 41 and 42. As well, an isolating switch 46 is provided which electrically engages with cable 47 when button 40 is depressed (power on position) and which disengages with cable 47 when the button is pulled upwardly (power off position). Figure 8 illustrates 2 types of splines 44 but it should be appreciated that the invention is not to be limited to these configuration of splines.

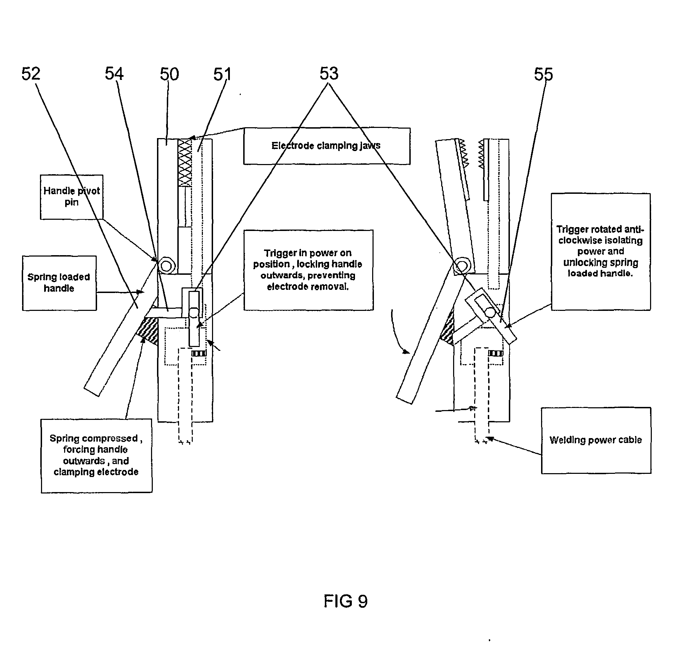

Figure 9 illustrates an embodiment of the invention. In this embodiment, jaws 50, 51 are operated by a spring-loaded handle 52. The isolating switch can be rotated and includes an electrically conductive member 53, a locking bar 54 and an external trigger 55. The locking bar 54 locks against the underneath of handle 52 to prevent handle 52 from being squeezed to open jaws 50, 51. The isolating switch can be rotated by rotating trigger 55 which causes electrically conductive member 53 to disengage with jaw 51, thereby adopting the off position and also causes locking bar 54 to move away from handle 52, thereby allowing handle 52 to be squeezed to open jaws 50, 51. Thus, an electrode can only be inserted between jaws 50, 51 when the power is in the off position.

The isolating switch can be made a relatively lightweight material to add minimal additional weight to the electrode holder so as to not create discomfort to the operator. The isolating switch can be positioned on any part of the electrode holder or even on the power cable which connects the electrode holder so as to not create discomfort to the operator.

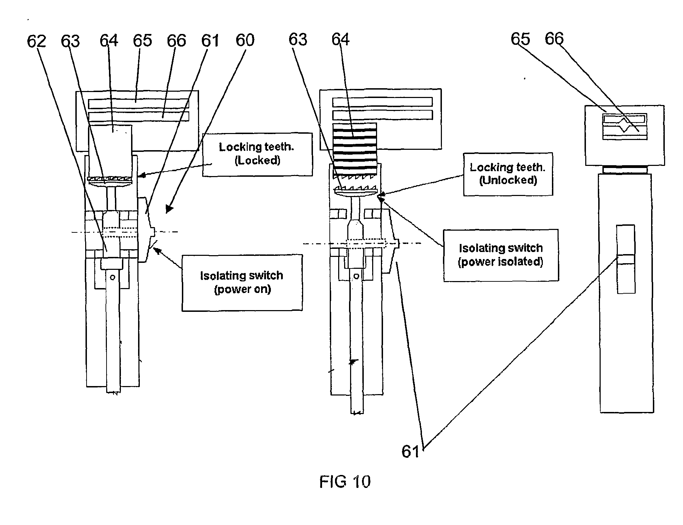

Referring to figure 10, isolating switch 16 comprises a sliding button 61 which can slide between a power on position (up position) and a power off position (down position). Button 61 is connected to an electrically conductive member 62. The top of member 62 is provided with a plate 63 containing teeth, this being similar to that described with reference to figure 6. Plate 63 engages with teeth on the bottom of collar 64. The collar 64 rotates to lock and unlock jaws 65, 66. When button 61 has been slid into the on position, plate 63 engages with the bottom of collar 64 to prevent the collar from being rotated and thus preventing an electrode from being removed from between jaws 65, 66. Also, this action causes power to float to jaws 65, 66. Conversely, when button 61 has been slid down into the off position, plate 63 no longer engages with collar 64 and this action also isolates power from jaws 65, 66.

## Claims

1. An electrode holder, the holder containing jaws (50, 51) to attach an electrode to the holder, and an isolating switch to isolate the power source from the electrode. the isolating switch being operable independently of the jaws (50, 51) and the isolating switch being movable between a power isolating position and a power use position, the isolating switch remaining in one of said positions until moved to the other position by a user,
**characterized in that**
**that** the jaws (50, 51) are operable by a spring-loaded handle (52), the isolating switch can be rotated and includes an electrically conductive member (53), a locking bar (54) and an external trigger (55), and **in**
**that** the locking bar (54) locks against the underneath of the handle (52) to prevent it from being squeezed to open jaws (50, 51), wherein the isolating switch can be rotated by rotating trigger (55) to a position which causes the electrically conductive member (53) to disengage with jaw (51), thereby adopting the power isolating position and also causing locking bar (54) to move away from handle (52) thereby allowing handle (52) to be squeezed to open jaws (50, 51).

2. The holder as claimed in claim 1, wherein the holder comprises a handle portion (11), the isolating switch being in the handle portion (11).

3. The holder as claimed in claim 2, wherein the isolating switch comprises an electric connecting member (53) and an external hand operated member (52).

4. The holder as claimed in claim 1, wherein the handle (52) is movable between an extended position and a retracted position, the jaws (50, 51) being opened when the handle (52) is in the retracted position, the isolating switch, when in the power use position, locking the handle (52) into the extended position, the isolating switch, when in the power isolating position, freeing the handle (52) to allow the handle to adopt the retracted position to enable an electrode to be removed from the attachment means.

## Patentansprüche

1. Elektrodenhalter, der Klemmbacken (50, 51) aufweist, um eine Elektrode an dem Halter zu befestigen, sowie einen Trennschalter, um die Stromquelle von der Elektrode zu trennen, wobei der Trennschalter unabhängig von den Klemmbacken (50, 51) betätigt werden kann und der Trennschalter zwischen einer Stromtrennposition und einer Stromeinsatzposition bewegbar ist, und wobei der Trennschalter in einer der genannten Positionen bleibt, bis er durch einen Anwender in die andere Position bewegt wird,
**dadurch gekennzeichnet,**
**dass** die Klemmbacken (50, 51) durch einen federbeaufschlagten Griff (52) betätigt werden können, wobei der Trennschalter gedreht werden kann und ein elektrisch leitendes Element (53), einen Riegel (54) und einen externen Auslöser (55) aufweist, und
**dass** der Riegel (54) die Unterseite des Griffs (52) verriegelt, um zu verhindern, dass dieser zum Öffnen der Klemmbacken (50, 51) zusammengedrückt werden kann, wobei der Trennschalter gedreht werden kann, indem der Auslöser (55) in eine Position gedreht wird, die bewirkt, dass das elektrisch leitende Element (53) sich von der Klemmbacke (51) löst, wodurch die Stromtrennposition eingenommen und außerdem bewirkt wird, dass sich der Riegel (54) von dem Griff (52) weg bewegt, was es erlaubt, den Griff (52) zusammenzudrücken, um die Klemmbacken (50, 51) zu öffnen.

2. Halter nach Anspruch 1, bei dem der Halter einen Griffbereich (11) aufweist und der Trennschalter sich in dem Griffbereich (11) befindet.

3. Halter nach Anspruch 2, bei dem der Trennschalter ein elektrisches Verbindungselement (53) und ein externes, handbetätigtes Element (52) aufweist.

4. Halter nach Anspruch 1, bei dem der Griff (52) zwischen einer ausgefahrenen Position und einer Einzugsposition bewegt werden kann, wobei die Klemmbacken (50, 51) geöffnet werden, wenn der Griff (52) in der Einzugsposition ist, und wobei der Trennschalter in der Stromeinsatzposition den Griff (52) in der ausgefahrenen Position verriegelt und der Trennschalter in der Stromtrennposition den Griff (52) freigibt, um zu ermöglichen, dass der Griff die Einzugsposition einnimmt, und damit zu ermöglichen, dass eine Elektrode aus dem Befestigungsmittel entnommen werden kann.

## Revendications

1. Porte-électrode, le support contenant des mâchoires (50, 51) pour fixer une électrode sur le support, et un sectionneur pour isoler la source d'énergie de l'électrode, le sectionneur pouvant fonctionner indépendamment des mâchoires (50, 51) et le sectionneur étant mobile entre une position d'isolation d'énergie et une position d'utilisation d'énergie, le sectionneur restant dans l'une desdites positions jusqu'à ce qu'il soit déplacé dans l'autre position par un utilisateur,
**caractérisé en ce que** ;
les mâchoires (50, 51) peuvent être actionnées par une poignée à ressort (52), le sectionneur peut être entraîné en rotation et comprend un élément électriquement conducteur (53), une barre de blocage (54) et un déclencheur externe (55), et **en ce que** ;
la barre de blocage (54) se bloque contre la partie inférieure de la poignée (52) pour l'empêcher d'être comprimée afin d'ouvrir les mâchoires (50, 51), dans lequel le sectionneur peut être entraîné en rotation en faisant tourner le déclencheur (55) dans une position qui amène l'élément électriquement conducteur (53) à se dégager de la mâchoire (51), adoptant ainsi la position d'isolation d'énergie et amenant également la barre de blocage (54) à s'écarter de la poignée (52) permettant ainsi à la poignée (52) d'être comprimée pour ouvrir les mâchoires (50, 51).

2. Support selon la revendication 1, dans lequel le support comprend une partie de poignée (11), le sectionneur étant dans la partie de poignée (11).

3. Support selon la revendication 2, dans lequel le sectionneur comprend un élément de raccordement électrique (53) et un élément externe actionné à la main (52).

4. Support selon la revendication 1, dans lequel la poignée (52) est mobile entre une position étendue et une position rétractée, les mâchoires (50, 51) étant ouvertes lorsque la poignée (52) est dans la position rétractée, le sectionneur, lorsqu'il est dans la position d'utilisation d'énergie, bloquant la poignée (52) dans la position étendue, le sectionneur, lorsqu'il est dans la position d'isolation d'énergie, libérant la poignée (52) pour permettre à la poignée d'adopter la position rétractée pour permettre de retirer une électrode des moyens de fixation.
